# FASCICULE DE BREVET EUROPEEN

(11) **EP 0 817 423 B1**
(45) Date de publication et mention de la délivrance du brevet: **28.09.2005**
(21) Numéro de dépôt: 97401563.8
(22) Date de dépôt: 02.07.1997
(51) Int. Cl.: H04L 12/24, H04L 29/06

(54) **Procédé et dispositif de configuration d'un réseau de communication**
Verfahren und Vorrichtung zum Konfigurieren eines Kommunikationsnetzes
Method and apparatus for configuring a communications network

(30) Priorité: 04.07.1996 FR 9608355
(43) Date de publication de la demande: 07.01.1998
(73) Titulaire: HAGER ELECTRO S.A., F-67210 Obernai (FR)
(72) Inventeur: Hurstel, Laurent, 67230 Herbsheim (FR); Weffling, Pascal, 67530 Saint-Nabor (FR); Eichler, Daniel, 67520 Marlenheim (FR)
(74) Mandataire: Moncheny, Michel

(56) Documents cités:
- EP-A- 0 315 158
- EP-A- 0 466 152
- WO-A-90/15394
- FR-A- 2 670 590
- PATENT ABSTRACTS OF JAPAN vol. 018, no. 486 (E-1604), 9 septembre 1994 & JP 06 164592 A (HITACHI LTD), 10 juin 1994,

## Description

La présente invention concerne un procédé de configuration d'un réseau de communication comportant des modules fonctionnels formés par des capteurs et des actionneurs communiquant entre eux directement par l'intermédiaire d'un bus de communication, les capteurs et les actionneurs comportant chacun, après configuration, des paramètres de configuration permettant à chaque capteur de commander certains actionneurs, lesquels paramètres de configuration sont affectés depuis une unité centrale de configuration.

Elle concerne en outre un dispositif de configuration d'un réseau de communication, lequel réseau comporte des modules fonctionnels formés par des capteurs et des actionneurs communiquant entre eux directement par l'intermédiaire d'un bus de communication, les capteurs et les actionneurs comportant chacun, après configuration, des paramètres de configuration permettant à chaque capteur de commander certains actionneurs, le dispositif comportant une unité centrale de configuration pour l'affectation des paramètres de configuration.

Elle s'applique en particulier aux réseaux utilisant le bus EIB (European Installation Bus) et son protocole de communication, ou des réseaux équivalents utilisant des adresses de groupe contenues dans les paramètres de configuration pour assurer la communication entre les modules fonctionnels connectés sur le bus. En particulier, ces adresses de groupe permettent à chaque capteur de commander les actionneurs ayant la même adresse de groupe que lui.

Les réseaux de communication utilisant le bus EIB sont mis en oeuvre dans des bâtiments notamment afin d'assurer la surveillance ou la commande de différents dispositifs.

Par exemple, dans le cas de la commande de l'éclairage, les capteurs comportent des modules d'entrée auxquels sont reliés des organes de commande formés par des interrupteurs ou des boutons-poussoirs. Ils sont associés à des actionneurs comportant des modules de sortie, encore appelés pilotes de sortie, sur lesquels sont reliés des organes à commander formés par un ou plusieurs dispositifs d'éclairage. Dans le cas de la commande de volets roulants, la structure est similaire, les dispositifs d'éclairage étant remplacés par les moteurs électriques des volets roulants. Par ailleurs, dans le cadre de la commande du chauffage, les organes de commande sont par exemple des sélecteurs de consigne de température, ou encore des télécommandes téléphoniques, alors que les organes à commander sont des convecteurs. électriques ou tout autre émetteur de chaleur.

L'association des modules fonctionnels formés par les capteurs et les actionneurs est réalisée, dans ce type de réseaux, par l'affectation d'une même adresse de groupe aux capteurs et aux actionneurs devant communiquer entre eux, de sorte que les messages envoyés sur le réseau par un capteur et comportant l'adresse de groupe de ce capteur sont reconnus et pris en compte par les seuls actionneurs ayant cette même adresse de groupe. Ainsi, chaque capteur et chaque actionneur comporte une mémoire pour le stockage de son ou de ses adresses de groupe. En pratique, chaque capteur comporte d'une part un module d'entrée comportant cette mémoire et d'autre part un organe de commande qui est relié au module d'entrée et qui commande celui-ci. De même, chaque actionneur comporte un module de sortie dans lequel est prévue cette mémoire et un organe à commander, qui est relié au module de sortie et piloté par celui-ci.

La configuration d'un tel réseau consiste à affecter des adresses de groupe communes aux capteurs et aux actionneurs devant être associés et à leur affecter une fonction à réaliser lors de l'actionnement du capteur. Les adresses de groupe et les fonctions forment des paramètres de configuration. Ainsi par exemple, dans le cas de l'éclairage, pour que l'appui sur un bouton-poussoir puisse provoquer l'allumage d'une lampe, il est nécessaire que le module d'entrée associé au bouton-poussoir et le module de sortie associé à cette lampe aient la même adresse de groupe et que la fonction chargée dans le module d'entrée et dans le module de sortie corresponde à une fonction d'allumage.

Afin de permettre la configuration du réseau, les modules d'entrée ou de sortie comportent des boutons-poussoirs permettant leur adressage physique sur le réseau en vue du téléchargement de la ou des adresses de groupe ainsi que de la fonction qui sont affectés aux capteurs et actionneurs comportant ces modules. Dans l'état de la technique, un tel bouton-poussoir permet l'identification physique en provoquant le passage en mode d'adressage physique du module d'entrée ou de sortie de l'organe fonctionnel, qui attend alors l'émission sur le réseau de sa nouvelle adresse physique et d'autres données le concernant. Ainsi, il est nécessaire que l'unité centrale de configuration émettant sur le réseau l'adresse physique affectée à un module fonctionnel connaisse, préalablement à l'appui sur le bouton-poussoir du module d'entrée ou de sortie correspondant, l'existence de celui-ci et l'adresse physique qui va lui être affectée. Il faut donc que, préalablement à l'adressage physique du module fonctionnel, l'unité centrale de configuration dispose en mémoire d'un représentant logique du module fonctionnel.

Les moyens actuels de configuration de tels réseaux sont difficiles à mettre en oeuvre et nécessitent du personnel hautement qualifié.

Pour les réseaux utilisant le bus EIB, il est courant d'utiliser une unité centrale de configuration formée par un micro-ordinateur portable avec un logiciel de configuration dénommé "EIB TOOL SOFTWARE" (ETS).

Ce logiciel permet l'adressage physique et le téléchargement des adresses de groupe et des fonctions dans les capteurs et les actionneurs, à partir d'une interface assurant la connexion au réseau.

Toutefois, l'usage de ce logiciel est rendu difficile par le fait qu'il faille, lors d'une étape préalable au téléchargement, créer directement par des entrées au clavier de l'ordinateur des représentants logiques des capteurs et des actionneurs, puis affecter à ceux-ci les adresses de groupe que devront avoir les différents capteurs et actionneurs présents sur le réseau. Ce travail d'affectation est relativement ardu et nécessite du personnel qualifié puisqu'il nécessite un haut niveau d'abstraction, les affectations d'adresses de groupe devant être faites de manière théorique sans lien physique avec le réseau réel. Bien souvent cette étape d'affectation préalable est faite dans un bureau d'étude et non directement sur le site. En particulier, il faut, préalablement à l'affectation des adresses de groupe, définir pour chaque module fonctionnel (capteur ou actionneur) un représentant logique auquel sera affectée la ou les adresses de groupe. Chaque représentant logique d'un module fonctionnel reçoit un numéro d'ordre. Une fois le travail d'affectation des adresses de groupe aux représentants logiques effectué, il convient de télécharger les adresses de groupe dans les modules d'entrée ou de sortie comportant les capteurs et les actionneurs. Avant le téléchargement, il est nécessaire d'identifier physiquement chaque nouveau module d'entrée ou de sortie dans un ordre prédéfini, par appui sur le bouton-poussoir prévu à cet effet sur chacun d'eux. Après l'appui sur le bouton-poussoir d'un module d'entrée ou de sortie, celui-ci attend de recevoir du micro-ordinateur son adresse physique. L'adressage physique permet ensuite le téléchargement de l'adresse de groupe et des fonctions. L'oubli de l'identification physique de l'un des modules d'entrée ou de sortie conduit à une mauvaise configuration du réseau. La configuration d'un module fonctionnel avec le logiciel ETS nécessite d'abord la création d'un représentant logique de ce module fonctionnel et ensuite l'identification physique de son module d'entrée ou de sortie sur le réseau en vue du chargement de cette configuration. Ces deux opérations sont réalisées de manière indépendante, ce qui rend difficile l'emploi de ce logiciel.

EP 0 466 152 décrit un dispositif et un procédé d'installation de plusieurs émetteurs-récepteurs électriques montés dans un réseau de distribution d'énergie électriques.

La présente invention a pour but de fournir un procédé et un dispositif permettant une configuration facile du réseau de communication, réduisant les risques d'erreurs de configuration, minimisant la préparation préalable, et qui puissent être utilisés facilement par du personnel moins qualifié.

A cet effet, l'invention a pour objet un procédé de configuration d'un réseau de communication comportant des modules fonctionnels formés par des capteurs et des actionneurs communiquant entre eux directement par l'intermédiaire d'un bus de communication, les capteurs et les actionneurs comportant chacun, après configuration, des paramètres de configuration permettant à chaque capteur de commander certains actionneurs, lesquels paramètres de configuration sont affectés depuis une unité centrale de configuration, caractérisé en ce qu'il comporte pour la configuration d'un nouveau module fonctionnel introduit sur le réseau les étapes successives suivantes :
A) on identifie physiquement le nouveau module fonctionnel sur le réseau ;
B) le nouveau module fonctionnel émet, suite à son identification physique, un message d'identification à l'attention de l'unité centrale de configuration ;
C) à la réception dudit message d'identification, l'unité centrale de configuration crée un représentant logique du nouveau module fonctionnel ;
D) on affecte, à partir de l'unité centrale de configuration, des paramètres de configuration au représentant logique du nouveau module fonctionnel ;
E) l'unité centrale de configuration charge dans le nouveau module fonctionnel les paramètres de configuration affectés au représentant logique dudit nouveau module fonctionnel.

Le procédé peut comporter l'une ou plusieurs des caractéristiques suivantes :
- chaque nouveau module fonctionnel est identifié physiquement par l'enfoncement d'un bouton-poussoir porté par ledit module fonctionnel, l'enfoncement dudit bouton-poussoir produisant l'émission dudit message d'identification à l'attention de l'unité centrale de configuration ;
- après la réception dudit message d'identification, l'unité centrale de configuration affecte et charge dans le nouveau module fonctionnel une adresse physique permettant la communication ultérieure entre le nouveau module fonctionnel et l'unité centrale de configuration;
- les paramètres de configuration de chaque module fonctionnel comportent au moins une adresse de groupe, permettant à chaque capteur de commander les actionneurs ayant la même adresse de groupe que lui, et l'affectation, à l'étape D), d'une adresse de groupe au représentant logique du capteur ou de l'actionneur formant le nouveau module fonctionnel comporte les étapes suivantes :
   (i) on sélectionne le représentant logique d'un capteur à considérer,
   (ii) on sélectionne les représentants logiques d'actionneurs devant être commandés par ledit capteur considéré,
   (iii) l'unité centrale de configuration affecte au représentant logique du capteur considéré et aux représentants logiques desdits actionneurs la même adresse de groupe.
- après la sélection, aux étapes (i) et (ii), d'un capteur et des actionneurs devant être commandés par ledit capteur, on sélectionne une fonction à remplir par lesdits actionneurs sous la commande dudit capteur, laquelle fonction est ensuite chargée dans lesdits capteurs et actionneurs par l'unité centrale de configuration ;
- il comporte pour la configuration de plusieurs nouveaux modules fonctionnels les étapes successives suivantes :
   a) on met en oeuvre pour chaque nouveau capteur les étapes A), B) et C) d'identification physique, d'émission d'un message d'identification et de création d'un représentant logique du nouveau capteur ;
   b) pour chaque capteur, on effectue les étapes b₀) à b₃) suivantes :
      - b₀) on sélectionne le représentant logique du capteur à considérer,
      - b₁) on met en oeuvre pour les actionneurs devant être commandés par ledit capteur considéré les étapes A), B) et C) d'identification physique, d'émission d'un message d'identification, et si l'actionneur est identifié physiquement pour la première fois de création d'un représentant logique de celui-ci, ces étapes conduisant à la sélection des représentants logiques des actionneurs devant être commandés par le capteur considéré,
      - b₂) l'unité centrale de configuration affecte une même adresse de groupe au représentant logique du capteur considéré et aux représentants logiques des actionneurs sélectionnés devant être commandés par le capteur considéré,
      - b₃) on sélectionne depuis l'unité centrale de configuration une fonction à remplir par lesdits actionneurs sélectionnés sous la commande dudit capteur, cette fonction étant affectée aux représentants logiques du capteur et des actionneurs ;
   c) l'unité centrale de configuration charge dans les capteurs et les actionneurs les adresses de groupe et les fonctions affectées à leur représentant logique ;
      - il comporte pour la configuration de plusieurs nouveaux modules fonctionnels les étapes successives suivantes :

   a) on met en oeuvre pour chaque nouveau capteur et chaque nouvel actionneur les étapes A), B) et C) d'identification physique, d'émission d'un message d'identification et de création d'un représentant logique du nouveau capteur ou du nouvel actionneur ;
   b) pour chaque capteur, on effectue les étapes b₀) à b₃) suivantes :
      - b₀) on sélectionne le représentant logique du capteur à considérer,
      - b₁) on sélectionne les représentants logiques des actionneurs devant être commandés par ledit capteur considéré,
      - b₂) l'unité centrale de configuration affecte une même adresse de groupe au représentant logique du capteur considéré et aux représentants logiques des actionneurs sélectionnés devant être commandés par ledit capteur considéré,
      - b₃) on sélectionne depuis l'unité centrale de configuration une fonction à remplir par lesdits actionneurs sélectionnés sous la commande dudit capteur, cette fonction étant affectée aux représentants logiques du capteur et des actionneurs ;
   c) l'unité centrale de configuration charge dans les capteurs et les actionneurs les adresses de groupe et les fonctions affectées à leur représentant logique ;
      - lors de l'étape de sélection et d'affectation d'une fonction à remplir aux représentants logiques du capteur et des actionneurs sélectionnés, il comporte les étapes suivantes :
         i) on attribue au capteur considéré une unique fonction de commande des actionneurs sélectionnés ;
         ii) on affecte aux représentants logiques de tous les actionneurs sélectionnés la même unique fonction attribuée au capteur considéré ; et
      - on attribue un numéro d'ordre à chaque représentant logique d'un capteur lors de la création du représentant logique et en ce que les étapes effectuées pour chaque capteur sont réalisées en fonction de ce numéro d'ordre, ledit capteur étant désigné par ledit numéro d'ordre.

L'invention a en outre pour objet un dispositif de configuration d'un réseau de communication d'un réseau de communication, lequel réseau comporte des modules fonctionnels formés par des capteurs et des actionneurs communiquant entre eux directement par l'intermédiaire d'un bus de communication, les capteurs et les actionneurs comportant chacun, après configuration, des paramètres de configuration permettant à chaque capteur de commander certains actionneurs, le dispositif comportant une unité centrale de configuration pour l'affectation des paramètres de configuration, caractérisé en ce qu'il comporte pour la configuration d'un nouveau module fonctionnel introduit sur le réseau:
A) des moyens pour identifier physiquement le nouveau module fonctionnel sur le réseau ;
B) des moyens d'émission par le nouveau module fonctionnel, suite à son identification physique, d'un message d'identification à l'attention de l'unité centrale de configuration ;
C) des moyens de création, à la réception dudit message d'identification, par l'unité centrale de configuration d'un représentant logique du nouveau module fonctionnel ;
D) des moyens d'affectation, par l'unité centrale de configuration, de paramètres de configuration au représentant logique du nouveau module fonctionnel ;
E) des moyens de chargement dans le nouveau module fonctionnel par l'unité centrale de configuration des paramètres de configuration affectés au représentant logique dudit nouveau module fonctionnel.

Le dispositif peut comporter l'une ou plusieurs des caractéristiques suivantes :
- chaque module fonctionnel comporte un bouton-poussoir d'identification dont l'enfoncement produit l'émission dudit message d'identification à l'attention de l'unité centrale de configuration ;
- l'unité centrale de configuration comporte un micro-contrôleur associé d'une part à une unité de couplage pour la transmission d'informations entre le micro-contrôleur et les capteurs et les actionneurs présents sur le bus et d'autre part à un panneau de configuration portant une interface utilisateur ;
- les paramètres de configuration de chaque module fonctionnel comportent au moins une adresse de groupe, permettant à chaque capteur de commander les actionneurs ayant la même adresse de groupe que lui, et il comporte :
   (i) des moyens intégrés à l'unité centrale de configuration pour sélectionner le représentant logique d'un capteur à considérer,
   (ii) des moyens pour sélectionner les représentants logiques d'actionneurs devant être commandés par ledit capteur considéré,
   (iii) des moyens intégrés à l'unité centrale de configuration pour affecter au représentant logique du capteur considéré et aux représentants logiques desdits actionneurs une même adresse de groupe ;
- l'unité centrale de configuration comporte des moyens pour sélectionner une fonction à remplir par lesdits actionneurs sous la commande dudit capteur, et des moyens pour charger ladite fonction dans lesdits capteurs et actionneurs ;
- il comporte pour la configuration de plusieurs nouveaux modules fonctionnels :
   a) des moyens pour mettre en oeuvre pour chaque nouveau capteur l'identification physique, l'émission d'un message d'identification et la création d'un représentant logique du nouveau capteur ;
   b) des moyens pour effectuer pour chaque capteur:
      - b₀) une sélection du représentant logique du capteur à considérer,
      - b₁) une mise en oeuvre pour les actionneurs devant être commandés par ledit capteur considéré de l'identification physique, de l'émission d'un message d'identification, et si l'actionneur est identifié physiquement pour la première fois, de la création d'un représentant logique de celui-ci, cette mise en oeuvre conduisant à la sélection des représentants logiques des actionneurs devant être commandés par le capteur considéré,
      - b₂) une affectation par l'unité centrale de configuration d'une même adresse de groupe au représentant logique du capteur considéré et aux représentants logiques des actionneurs sélectionnés devant être commandés par le capteur considéré,
      - b₃) une sélection depuis l'unité centrale de configuration d'une fonction à remplir par lesdits actionneurs sélectionnés sous la commande dudit capteur, cette fonction étant affectée aux représentants logiques du capteur et des actionneurs ;
   c) des moyens de chargement par l'unité centrale de configuration dans les capteurs et les actionneurs des adresses de groupe et des fonctions affectées à leur représentant logique ;

   - il comporte pour la configuration de plusieurs nouveaux modules fonctionnels :
      a) des moyens pour mettre en oeuvre pour chaque nouveau capteur et chaque nouvel actionneur l'identification physique, l'émission d'un message d'identification et la création d'un représentant logique du nouveau capteur et du nouvel actionneur ;
      b) des moyens pour effectuer pour chaque capteur:
         - b₀) une sélection du représentant logique du capteur à considérer,
         - b₁) une sélection des représentants logiques des actionneurs devant être commandés par ledit capteur considéré,
         - b₂) une affectation par l'unité centrale de configuration d'une même adresse de groupe au représentant logique du capteur considéré et aux représentants logiques des actionneurs sélectionnés devant être commandés par ledit capteur considéré,
         - b₃) une sélection depuis l'unité centrale de configuration d'une fonction à remplir par lesdits actionneurs sous la commande dudit capteur, cette fonction étant affectée aux représentants logiques des capteurs et des actionneurs ;
      c) des moyens de chargement par l'unité centrale de configuration dans les capteurs et les actionneurs des adresses de groupe et des fonctions affectées à leur représentant logique ;
- l'unité centrale de configuration comporte :
   i) des moyens pour attribuer au capteur considéré une unique fonction de commande des actionneurs sélectionnés ;
   ii) des moyens pour affecter aux représentants logiques de tous les actionneurs sélectionnés la même unique fonction attribuée au capteur considéré ;
- les moyens pour attribuer au capteur une unique fonction de commande des actionneurs sélectionnés comportent un panneau de configuration muni de boutons-poussoirs pour la sélection d'une fonction prédéterminée, chaque bouton-poussoir étant associé à au moins une fonction ;
- il comporte des moyens d'identification du type d'actionneur sélectionné et il comporte des moyens pour affecter aux boutons-poussoirs des fonctions sélectionnables compatibles avec le type d'actionneur sélectionné ;
- l'unité centrale de configuration comporte des moyens pour affecter et charger une adresse physique dans le nouveau module fonctionnel identifié, après la réception dudit message d'identification ;
- l'unité centrale de configuration comporte des moyens de numérotation des capteurs lors de leur identification physique et elle comporte des moyens de sélection des numéros attribués pour sélectionner le capteur à considérer ;
- l'unité centrale de configuration comporte des moyens d'affichage des numéros attribués aux capteurs ; et
- l'unité centrale de configuration comporte des moyens de mémorisation pour mémoriser les paramètres de configuration affectés avant leur chargement dans les capteurs ou les actionneurs.

L'invention a également pour objet un réseau de communication comportant des capteurs et des actionneurs communiquant entre eux directement par l'intermédiaire d'un bus de communication, les capteurs et les actionneurs comportant chacun, après configuration, des paramètres de configuration permettant à chaque capteur de commander les actionneurs, caractérisé en ce qu'il comporte un dispositif de configuration tel que défini ci-dessus.

En particulier, le réseau peut être tel que chaque actionneur comporte un module de sortie relié à un organe à commander, lequel module de sortie comporte des moyens de commande de l'organe à commander et des moyens permettant l'identification physique de l'actionneur sur le réseau et lesdits modules de sortie et ladite unité centrale de configuration sont disposés au voisinage immédiat les uns des autres, notamment sur un même tableau électrique, les rendant ainsi accessibles simultanément.

L'invention sera mieux comprise à la lecture de la description qui va suivre, donnée uniquement à titre d'exemple et faite en se référant aux dessins sur lesquels :
- La figure 1 est une vue schématique d'un réseau de type EIB, comportant un dispositif de configuration selon l'invention ;
- La figure 2 est une vue schématique du dispositif de configuration ;
- La figure 3 est une vue en élévation du panneau de configuration du dispositif de configuration ;
- La figure 4 est un organigramme fonctionnel explicitant le fonctionnement du dispositif de configuration et le procédé mis en oeuvre.

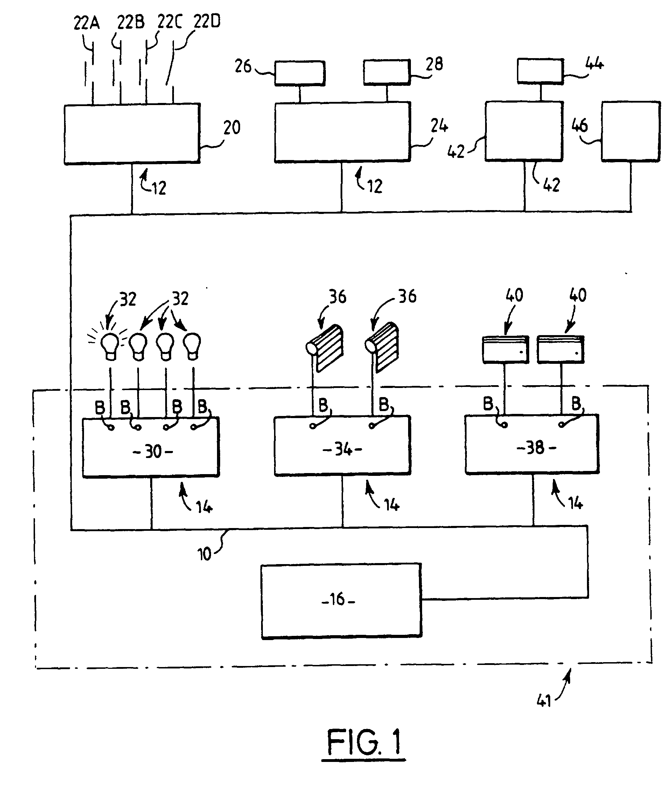

Sur la figure 1 est représenté un réseau de communication du type EIB. La structure générale d'un tel réseau de communication est décrite notamment dans le document "Handbook EIB", disponible auprès de la société EIBA à Bruxelles dans sa version 2.21.

Le réseau représenté sur la figure 1 comporte essentiellement un bus de communication 10 sur lequel sont reliés des modules fonctionnels formés par des capteurs 12 et des actionneurs 14 ainsi qu'une unité centrale de configuration 16 du dispositif de configuration. Les autres éléments du dispositif de configuration sont intégrés aux modules fonctionnels et seront décrits par la suite. Le réseau comporte en outre des moyens d'alimentation non représentés.

Ce réseau est supposé être un réseau s'étendant dans les différentes pièces d'un bâtiment, tel qu'une maison individuelle, un immeuble à usage d'habitation ou professionnel.

Afin de permettre la commande de certains actionneurs en vue de réaliser certaines fonctions à partir de certains capteurs spécifiques, un tel réseau doit être configuré. Ainsi, chaque capteur et actionneur comportent en mémoire, après configuration, au moins une adresse de groupe permettant à chaque capteur de commander les actionneurs ayant la même adresse de groupe que lui afin de remplir des fonctions affectées aux capteurs et aux actionneurs lors de la configuration.

Dans l'exemple représenté à la figure 1, un premier capteur comporte un module d'entrée 20, conçu pour commander par exemple des dispositifs d'éclairage et/ou des volets roulants. Ce module d'entrée comporte quatre voies d'entrée permettant le raccordement de quatre boutons-poussoirs, interrupteurs ou contacts d'automatisme. Sur la figure 1, ont été schématisés trois boutons-poussoirs 22A, 22B, 22C et un interrupteur 22D.

Un tel module d'entrée comporte des moyens d'émission sur le réseau, après configuration, d'un message de commande comportant notamment son adresse de groupe lors de l'actionnement d'un organe de commande qui lui est connecté. Il comporte en outre, pour chaque voie d'entrée, un bouton-poussoir d'identification physique, qui peut être l'organe de commande lui-même. Ce bouton-poussoir est relié à des moyens d'émission sur le réseau d'un message d'identification vers l'unité centrale de configuration 16. Ce message comporte des informations permettant à l'unité centrale de configuration de déterminer le type de module fonctionnel et la voie d'entrée identifiée.

Le module d'entrée comporte également des moyens de réception et de mémorisation d'une adresse physique qu'il reçoit de l'unité centrale de configuration suite à la réception par celle-ci du premier message d'identification adressé par le module d'entrée. Cette adresse physique permet un appel ultérieur du module d'entrée par l'unité centrale de configuration, notamment en vue de lui affecter une nouvelle adresse de groupe.

Le réseau de la figure 1 comporte un second module d'entrée 24, de même type que le module 20, sur lequel sont connectés d'une part un sélecteur 26 de consigne pour le chauffage et d'autre part une télécommande téléphonique 28 d'arrêt ou de mise en marche du chauffage.

Les actionneurs 14 comportent chacun un module de sortie associé à des organes à commander. Chaque module de sortie comporte par exemple quatre voies de sortie sur chacune desquelles est connecté un organe à commander. Chaque voie de sortie du module de sortie est associée à un bouton-poussoir d'identification, désigné par la lettre B pour tous les modules de sortie sur la figure 1. Ce bouton-poussoir d'identification permet l'identification physique et la sélection de la voie de sortie lors de la configuration du réseau.

Dans le cadre des applications domestiques, les actionneurs présents sur le réseau peuvent être de plusieurs types distincts.

Si l'organe à commander est formé par une lampe, ou tout autre dispositif d'éclairage, l'actionneur comporte un module de sortie, dont la sortie commandée peut être variable en tension ou une alimentation en tout ou rien.

Dans l'exemple représenté, le module de sortie 30 comporte quatre voies de sortie sur lesquelles sont reliées quatre lampes 32.

Dans le cas de la commande de volets roulants, l'actionneur comporte un module de sortie 34 aux sorties duquel est relié un moteur de volet roulant 36.

Le module de sortie est susceptible de commander, en fonction des informations reçues sur le réseau, la montée ou la descente du volet roulant, ainsi que l'inclinaison vers le haut ou vers le bas des lames de ces volets roulants.

Par ailleurs, dans le cas de la commande du chauffage, l'actionneur 14 comporte un module de sortie 38 aux sorties duquel sont reliés des convecteurs 40.

Le module de sortie 38 permet notamment soit la commande directe du convecteur par des moyens de régulation calculant le temps de chauffe, soit la commande du convecteur pour son fonctionnement en mode confort, en mode réduit, en mode hors gel ou encore son arrêt en fonction des informations reçues sur le réseau.

De manière générale, un module de sortie comporte d'une part des moyens de pilotage ou d'alimentation de l'organe à commander qui lui est connecté et d'autre part des moyens de réception depuis le réseau de l'une des adresses de groupe qu'il s'est vu affecter lors de la configuration afin qu'il commande l'organe à commander.

Il comporte en outre pour chaque voie, comme les modules d'entrée, un bouton-poussoir d'identification B relié à des moyens d'émission sur le réseau d'un message d'identification. Le message d'identification comporte les informations permettant à l'unité centrale de configuration de déterminer le type de module de sortie et la voie identifiée. Comme les modules d'entrée, les modules de sortie comportent des moyens de réception et de mémorisation d'une adresse physique en vue de leur appel ultérieur par l'unité centrale de configuration. Il comporte également des moyens de réception et de mémorisation d'une ou de plusieurs adresses de groupe et de fonctions envoyées par l'unité centrale de configuration.

Dans une installation domestique, l'unité centrale de configuration 16, ainsi que les différents modules de sortie 30, 34, 38 sont disposés au voisinage immédiat les uns des autres par exemple sur un même tableau électrique 41, schématisé sur la figure 1 par un trait mixte ou sur des tableaux voisins. Des liaisons électriques sont alors établies dans le bâtiment entre les modules de sortie et les différents organes qu'ils commandent.

Toutefois, l'unité centrale de configuration 16 et les modules de sortie 30, 34, 38 peuvent également être placés sur des tableaux divisionnaires éloignés, disposés par exemple aux différents étages d'un bâtiment.

Dans une variante, l'unité centrale de configuration 16 peut être rendue mobile et portable. Sa liaison au réseau est alors assurée par un connecteur démontable ou par une liaison radio ou infrarouge, ou encore par courants porteurs.

Les modules d'entrée 20 et 24 peuvent être déportés au voisinage immédiat de l'organe de commande auquel ils sont associés. Il en est ainsi par exemple dans le cas des interrupteurs et des boutons-poussoirs, pour lesquels le module d'entrée est intégré dans le boîtier de l'interrupteur ou du bouton-poussoir. Le module d'entrée 24 est conçu pour être disposé dans le tableau électrique, et être raccordé par des conducteurs électriques à l'organe de commande auquel il est associé.

Le réseau représenté à la figure 1 comporte en outre, relié directement sur le bus 10 un transmetteur de température 42 associé à une sonde de température 44 et un régulateur de température 46. Ces derniers sont adaptés pour émettre sur le réseau des données liées à la température mesurée ou des commandes de chauffe pour les convecteurs.

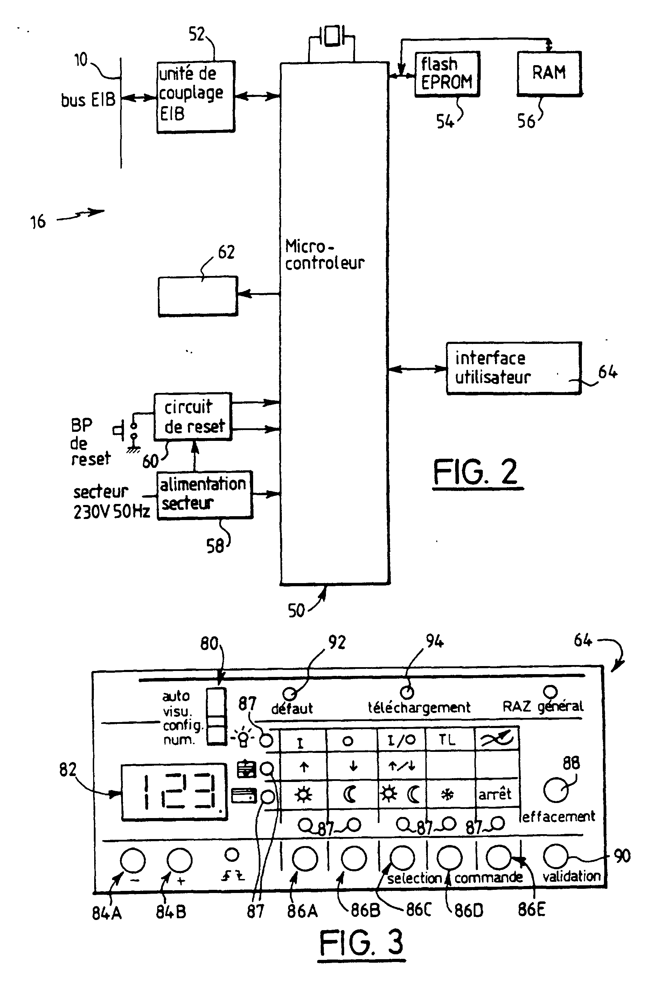

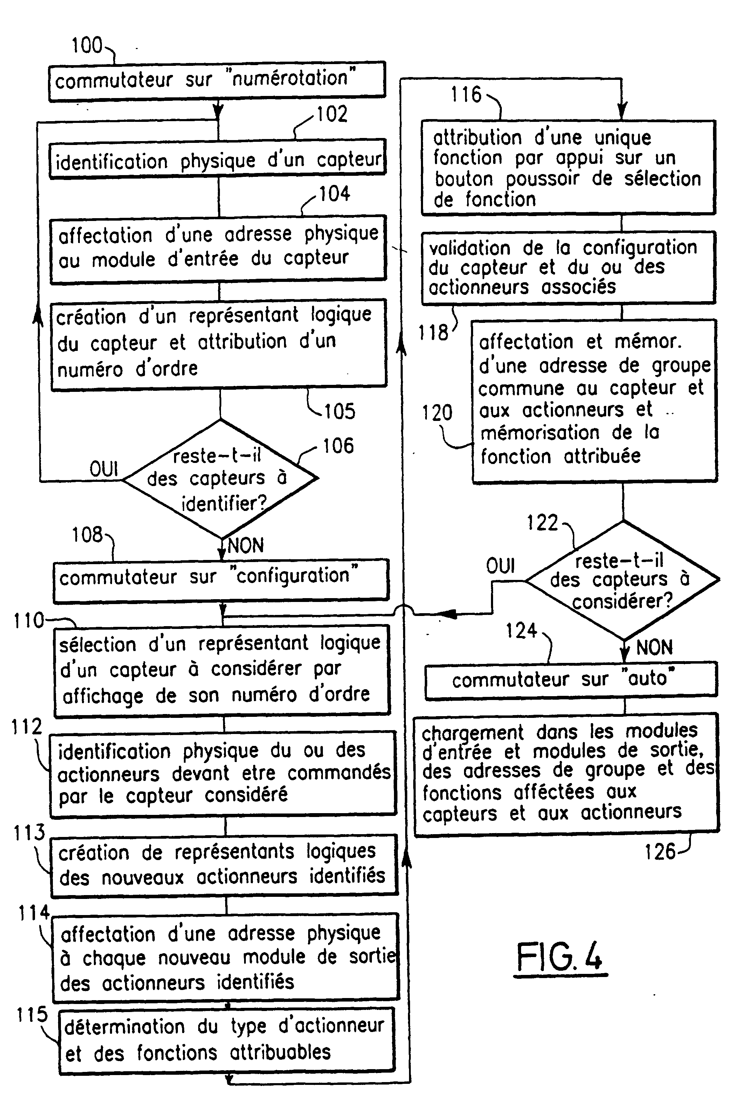

La structure de l'unité centrale de configuration 16 représentée à la figure 2 s'articule essentiellement autour d'un micro-contrôleur 50 destiné à mettre en oeuvre un programme applicatif assurant la configuration du réseau par mise en oeuvre d'un procédé qui sera décrit par la suite en regard de la figure 4.

Le micro-contrôleur 50 est associé à une unité de couplage 52 formant une interface de communication entre le micro-contrôleur 50 et le bus 10. Cette unité de couplage 52 permet l'émission et la réception de données entre le micro-contrôleur et le bus.

Le micro-contrôleur 50 est en outre associé à une mémoire de type non-volatile, réinscriptible, désignée par la référence 54 sur la figure 2. Le programme de démarrage, le programme applicatif, permettant la mise en oeuvre du procédé de configuration ainsi que la configuration physique de l'installation à partir des données mémorisées lors de la mise en oeuvre du procédé de configuration, sont par exemple stockés dans cette mémoire. Par ailleurs, une mémoire volatile 56 de type RAM est associée au micro-contrôleur pour des stockages temporaires de données au cours du fonctionnement du programme de configuration.

Par ailleurs, l'unité centrale de configuration 16 comporte des moyens d'alimentation 58, un circuit de remise à zéro 60 du micro-contrôleur et un générateur de signaux acoustique 62. Des moyens d'affichage et des moyens de saisie d'informations sont en outre reliés au micro-contrôleur 50. Ces derniers apparaissent sur la figure 3, représentant le panneau de configuration 64 portant l'interface utilisateur. Cette dernière est disposée sur la face avant de l'unité centrale de configuration 16.

Cette interface utilisateur comporte un commutateur 80 à quatre positions permettant de sélectionner le mode de fonctionnement de l'unité centrale de configuration. Elle comporte en outre un afficheur 82 à diodes électroluminescentes apte à afficher des chiffres compris entre 0 et 999. Cet afficheur est destiné à visualiser le numéro d'ordre du capteur en cours de configuration. Par ailleurs, elle comporte deux boutons-poussoirs 84A, 84B marqués des signes + et -, destinés à commander l'incrémentation ou la décrémentation du numéro d'ordre indiqué sur l'afficheur 82, afin de procéder successivement à la sélection et à la configuration des différents capteurs.

En outre, l'interface utilisateur comporte cinq boutons-poussoirs de sélection de fonction, notés 86A, 86B, 86C, 86D, 86E, disposés en regard des colonnes d'une matrice à trois lignes, chaque ligne correspondant à un type de fonctions à assurer propres au type d'organes à commander. Ces boutons-poussoirs sont destinés à sélectionner la fonction à affecter à un actionneur préalablement identifié. La matrice comporte à l'intersection de chaque ligne et de chaque colonne un idéogramme représentant une fonction propre à un type d'actionneur.

En regard de chaque ligne et chaque colonne de la matrice est en outre disposée une diode électroluminescente 87, dont l'allumage, commandé par le micro-contrôleur 50, permet la visualisation d'une part du type d'actionneur identifié, pour les diodes associées aux lignes de la matrice et d'autre part du type de commande affecté à l'actionneur pour les diodes associées aux colonnes de la matrice.

La première ligne de la matrice est dédiée aux fonctions d'éclairage. Ainsi, si l'unité centrale de configuration reconnaît qu'un module de sortie dédié à un dispositif d'éclairage a été identifié, les fonctions suivantes sont associées aux boutons-poussoirs :
bouton 86A - allumage
bouton 86B - extinction
bouton 86C - allumage/extinction
bouton 86D - inversion de l'état actuel
bouton 86E - commande variable de l'intensité.

La seconde ligne de la matrice correspond à la commande de volets roulants. La fonction associée à chaque bouton-poussoir est alors la suivante :
bouton 86A - montée du volet et inclinaison des lames vers le haut
bouton 86B - descente du volet et inclinaison des lames vers le bas
bouton 86C - montée/descente du volet en fonction d'une information auxiliaire.

La troisième et dernière ligne de la matrice correspond à la commande de moyens de chauffage. La fonction associée à chaque bouton-poussoir est alors la suivante :
bouton 86A - mode confort
bouton 86B - mode réduit
bouton 86C - mode mixte confort/réduit
bouton 86D - mode hors gel/non hors gel
bouton 86E - arrêt/fonctionnement.

Par ailleurs, la face avant de l'unité centrale de configuration 16 présente deux boutons 88 et 90 correspondant, pour le premier, à l'effacement d'une commande et, pour le second, à la validation d'une association d'un capteur, d'un ou de plusieurs actionneurs et d'une fonction à réaliser. La manière de réaliser une telle association sera décrite dans la suite.

L'interface utilisateur comporte en outre deux diodes électroluminescentes 92, 94, indiquant respectivement un défaut de configuration et un téléchargement de données en cours depuis l'unité centrale de configuration vers les modules d'entrée ou de sortie.

Le fonctionnement du dispositif de configuration et notamment de l'unité centrale de configuration ainsi que le procédé de configuration du réseau vont maintenant être décrits en regard de l'organigramme de la figure 4, reprenant les étapes du programme mis en oeuvre par le micro-contrôleur 50.

La première étape du procédé de configuration consiste à identifier physiquement chaque capteur sur le réseau. Le terme de capteur désigne, dans la suite, le couple formé par l'organe de commande et la voie du module d'entrée à laquelle est connecté cet organe de commande. Pour ce faire, le commutateur 80 est placé à l'étape 100 sur une première position dit de "numérotation". L'identification physique par l'opérateur d'un capteur s'effectue, à l'étape 102, en fonction du type de capteur soit par l'appui, directement sur celui-ci, s'il s'agit d'un bouton-poussoir, soit par l'enfoncement d'un bouton-poussoir d'identification prévu spécifiquement sur l'organe de commande ou sur le module d'entrée. Cette identification physique, conduit à l'émission d'un message d'identification sur le réseau. Ce message est reconnu par l'unité centrale de configuration 16, qui affecte, à l'étape 104, une adresse physique au module d'entrée, s'il s'agit d'un nouveau module d'entrée, permettant d'identifier ultérieurement celui-ci sur le réseau. L'adresse physique est envoyée au module d'entrée et stockée dans la mémoire de celui-ci.

Par ailleurs, à l'étape 105, l'unité centrale de configuration 16 crée un représentant logique du capteur auquel elle affecte notamment l'adresse physique, la voie du module d'entrée et un numéro d'ordre. Ce numéro d'ordre est déterminé de manière incrémentale, le premier capteur identifié portant le numéro 1, les capteurs suivants portant les nombres entiers successifs suivants.

Au cours de l'identification physique, l'opérateur note, pour chaque capteur, le numéro d'ordre qui lui est attribué. L'opérateur déduit de lui-même le numéro d'ordre que l'unité centrale de configuration attribue à chaque capteur, puisqu'il sait que le premier capteur identifié se verra attribuer le numéro 1, le second, le numéro 2, et ainsi de suite, de sorte que le numéro attribué à chaque capteur correspond à son rang d'actionnement. L'unité centrale de configuration fournit à l'opérateur des moyens d'acquittement de la prise en compte des identifications physiques des capteurs par un signal sonore.

Tant qu'il reste sur le réseau des capteurs encore non identifiés parmi ceux devant l'être, l'opérateur poursuit la procédure d'identification physique. Cette opération peut se faire en plusieurs fois lors d'une installation qui évolue par exemple.

Au cours de l'identification physique des capteurs successifs, les numéros d'ordre et les voies d'entrée des capteurs ainsi que les adresses physiques des modules d'entrée sont stockées en relation avec leurs représentants logiques dans la mémoire 56.

Lorsque l'ensemble souhaité des capteurs est identifié, à l'étape 106, l'opérateur place, à l'étape 108, le commutateur 80 sur une seconde position dite de "configuration".

Cette phase de configuration des actionneurs consiste à associer à chaque capteur un actionneur ou un groupe d'actionneurs et à affecter au capteur et aux actionneurs une fonction à remplir. Ainsi, conformément au mode de fonctionnement de ce type de réseau, la sollicitation d'un organe de commande d'un capteur conduira à l'actionnement de l'ensemble des actionneurs associés à ce capteur, suivant la fonction qui leur a été affectée.

Le terme d'actionneur désigne, dans la suite, le couple formé par l'organe à commander et la voie du module de sortie à laquelle est connecté cet organe à commander.

Afin de procéder à cette phase de configuration, l'opérateur sélectionne un représentant logique d'un premier capteur à considérer, à l'étape 110, par affichage sur l'afficheur 82 du numéro d'ordre de ce capteur. Pour ce faire, il provoque le défilement des numéros d'ordre sur l'afficheur par action sur les touches 84A et 84B.

Lorsque le numéro du capteur à considérer est affiché, l'opérateur identifie physiquement le ou les actionneurs devant être commandés par ce capteur. Cette opération s'effectue à l'étape 112 pour chaque actionneur par enfoncement du bouton-poussoir d'identification du module de sortie associé à l'actionneur. Cette identification s'effectue de manière aisée et sans déplacement, lorsque les modules de sortie sont placés sur le même tableau électrique que l'unité centrale de configuration.

Si le capteur est destiné à commander plusieurs actionneurs, l'opérateur effectue une identification physique de ces différents actionneurs à commander.

L'identification physique d'un actionneur conduit comme dans le cas de l'identification physique d'un capteur à la création, à l'étape 113, d'un représentant logique de cet actionneur par l'unité centrale de configuration 16. A cet effet, à la suite de l'enfoncement du bouton-poussoir d'identification, l'actionneur émet un message d'identification vers l'unité centrale de configuration, qui crée alors un représentant logique de l'actionneur.

A l'étape 114, si l'identification physique d'un actionneur fait référence à un nouveau module de sortie, l'unité centrale de configuration 16 affecte au nouveau module de sortie une adresse physique, permettant sa reconnaissance sur le réseau. Cette adresse physique est envoyée au module de sortie et est stockée dans la mémoire de celui-ci. Cette étape est omise si le module de sortie a déjà été adressé physiquement. Cette adresse physique et la voie de sortie sont associées au représentant logique de l'actionneur et sont stockées dans la mémoire 56 de l'unité centrale de configuration.

Lors de l'identification physique de l'actionneur, l'unité centrale de configuration détermine à l'étape 115, à partir du message d'identification physique émis sur le réseau, le type d'actionneur identifié et en déduit les fonctions qui lui sont attribuables.

Le micro-contrôleur commande alors l'allumage de l'une des diodes électroluminescentes correspondant à la ligne de la matrice associée au type d'actionneur identifié (commande d'éclairage, de volets roulants ou de chauffage). Au fur et à mesure de l'identification des actionneurs devant être associés au capteur considéré, l'unité centrale de configuration vérifie que tous les actionneurs identifiés sont de même type. Si tel n'est pas le cas ou si les actionneurs identifiés ne sont pas compatibles avec le capteur considéré, le micro-contrôleur actionne le générateur de signaux acoustiques 62. L'identification physique est ignorée.

A l'étape 116, l'opérateur attribue une fonction aux représentants logiques du capteur et des actionneurs considérés par appui sur l'un des boutons-poussoirs 86A à 86E dont la fonction associée est indiquée par un idéogramme figurant dans la ligne de la matrice désignée par la diode allumée. L'enfoncement d'un bouton-poussoir 86A à 86E attribue une fonction aux représentants logiques du capteur sélectionné et des actionneurs identifiés. Lors de l'enfoncement du bouton-poussoir de sélection, la diode désignant la colonne associée de ce bouton-poussoir s'allume. L'appui sur le bouton-poussoir 90, à l'étape 118, permet la validation de la configuration du capteur et des actionneurs associés.

Ainsi, l'unité centrale de configuration 16 affecte automatiquement, à l'étape 120, une même adresse de groupe au représentant logique du capteur considéré et aux représentants logiques des actionneurs identifiés lors de l'étape 112 précédente. Elle mémorise dans la mémoire 56 l'attribution aux représentants logiques des capteurs et des actionneurs de cette adresse de groupe commune ainsi que la fonction affectée.

L'enfoncement du bouton-poussoir 88 permet à tout moment l'effacement de la mémoire de l'association réalisée pour le capteur actuellement désigné sur l'afficheur 82.

Les étapes 110 à 120 sont reproduites ainsi pour chaque capteur jusqu'à épuisement des capteurs à configurer. Lorsque, à l'étape 122, tous les capteurs identifiés ont été considérés et associés à un ou plusieurs actionneurs, le commutateur 80 est placé, à l'étape 124, sur la position "auto" correspondant à la configuration physique du réseau et déclenchant le téléchargement des données de configuration. Ces données sont sauvegardées dans la mémoire 54.

L'unité centrale de configuration 16 procède alors, à l'étape 126, à partir des données stockées en mémoire pour chaque représentant logique d'un capteur ou d'un actionneur, au téléchargement des adresses de groupe et des fonctions associées dans les différents capteurs, et dans les différents actionneurs. Ce téléchargement est rendu possible par la paramétrisation préalable des représentants logiques des capteurs et des actionneurs qui contiennent les adresses physiques de chaque capteur et de chaque actionneur, ainsi que la ou les adresses de groupe et les fonctions qui leur sont affectées. Au cours du téléchargement, la diode 94 clignote informant l'utilisateur de l'opération en cours. Cette étape achève la configuration physique du réseau.

On comprend que chacun des capteurs et actionneurs présents sur le réseau reçoit par mise en oeuvre de ce procédé une adresse de groupe, permettant aux capteurs de commander les actionneurs possédant la même adresse de groupe. Les capteurs et les actionneurs réagissent conformément à la fonction téléchargée qui leur a été affectée.

La mise en oeuvre d'un tel procédé de configuration, à l'aide d'un dispositif de configuration tel que décrit précédemment, permet une configuration aisée d'un réseau dont les capteurs et les organes à commander des actionneurs sont répartis dans des pièces distinctes d'un bâtiment. En effet, l'identification physique des capteurs ne nécessite qu'un unique passage auprès de chacun de ceux-ci en vue de leur actionnement et une simple prise de note éventuelle des numéros d'ordre attribués aux capteurs. Les étapes suivantes de configuration s'effectuent sans déplacement, directement devant le tableau électrique sur lequel sont montés l'unité centrale de configuration et les divers modules de sortie.

Il n'est donc pas nécessaire, pour l'opérateur, de définir lui-même des adresses de groupe communes aux capteurs et aux actionneurs, ni de procéder à une identification physique préalable des modules de sortie. L'identification des modules de sortie s'effectue au fur et à mesure de la configuration du réseau, capteur après capteur, les fonctions étant attribuées immédiatement après l'identification du ou des modules de sortie à associer depuis l'interface utilisateur. Dans ces conditions, l'identification des modules de sortie et l'affectation d'une fonction s'effectue de manière naturelle.

En outre, alors que l'usage du logiciel ETS pour configurer un tel réseau nécessite de créer, préalablement à leur identification physique, un représentant logique pour chaque module fonctionnel du réseau, le procédé mis en oeuvre ici assure la création automatique du représentant logique de chaque module fonctionnel à partir de l'identification physique de celui-ci. Ceci améliore la cohérence de la configuration et réduit considérablement les erreurs de configuration.

Après la configuration du réseau, la quatrième position du sélecteur 80 permet de visualiser l'état de configuration du réseau. Ainsi, pour chaque capteur sélectionné sur l'afficheur 82 par son numéro d'ordre, la fonction associée à ce capteur est désignée à l'intersection de la ligne et de la colonne de la matrice dont les diodes sont allumées. De plus, les diodes des voies des modules de sortie portant la même adresse de groupe que le capteur sont allumées.

En variante non représentée, le procédé mis en oeuvre pour la configuration du réseau prévoit l'identification préalable des capteurs, comme décrit précédemment mais également celle des actionneurs.

Ainsi, comme précédemment, les capteurs sont identifiés physiquement successivement par l'enfoncement de leurs boutons-poussoirs. L'unité centrale de configuration crée alors un représentant logique de chaque capteur auquel elle associe une adresse physique et un numéro d'ordre. L'adresse physique est stockée dans la mémoire du module d'entrée de chaque capteur.

De même, et préalablement à toute affectation d'adresses de groupe, tous les actionneurs à configurer sont identifiés physiquement successivement par enfoncement de leurs boutons-poussoirs. L'unité centrale de configuration 16 crée alors pour chacun d'eux un représentant logique auquel elle attribue un numéro d'ordre et une adresse physique. Cette dernière est mémorisée dans la mémoire du module de sortie de chaque actionneur.

Afin de procéder à l'affectation des adresses de groupe et des fonctions à réaliser par les capteurs et les actionneurs, l'interface de communication de l'unité centrale de configuration comporte deux afficheurs. Un premier est destiné à l'affichage des numéros d'ordre attribués aux représentants logiques des capteurs. Le second est destiné à l'affichage des numéros d'ordres attribués aux actionneurs devant être associés au capteur affiché sur le premier afficheur. L'interface de communication comporte comme précédemment une matrice permettant d'affecter des fonctions.

Afin de procéder à la configuration, le numéro d'ordre du représentant logique d'un capteur est affiché sur le premier afficheur, alors que les numéros d'ordre des représentants logiques des actionneurs devant être commandés par ledit capteur sont simultanément affichés sur le second afficheur par des moyens de sélection à touches appropriés.

La fonction devant être réalisée par les actionneurs ainsi sélectionnés est ensuite définie à partir des touches de fonction.

La configuration partielle ainsi définie est mémorisée par l'appui sur le bouton de validation. Ceci conduit à l'affectation et la mémorisation d'une même adresse de groupe et de la fonction pour les représentants logiques des capteurs et des actionneurs.

Cette étape de configuration est ainsi effectuée pour chaque capteur du réseau. Comme précédemment, les données mémorisées par l'unité centrale de configuration pour chacun des représentants logiques des capteurs et des actionneurs sont ensuite téléchargées dans les capteurs et les actionneurs.

Avec ce procédé de configuration, mis en oeuvre par le dispositif de configuration décrit ci-dessus, les représentants logiques des capteurs et des actionneurs sont à nouveau créés automatiquement par l'unité centrale de configuration et résultent directement de la désignation physique de ceux-ci. Ainsi, les risques d'erreur lors de la configuration sont réduits par rapport à l'utilisation du logiciel ETS.

Dans un dispositif de configuration tel que décrit ici, chaque capteur et chaque actionneur comporte un bouton-poussoir propre afin d'assurer son identification. Ainsi, chaque module d'entrée ou de sortie porte autant de boutons-poussoirs que de voies, ce qui facilite la configuration et permet d'assurer la création d'un représentant logique pour chaque nouveau capteur ou actionneur par simple appui sur son propre bouton-poussoir.

## Revendications

1. Procédé de configuration d'un réseau de communication comportant des modules fonctionnels formés par des capteurs (12) et des actionneurs (14) communiquant entre eux directement par l'intermédiaire d'un bus de communication (10), les capteurs (12) et les actionneurs (14) comportant chacun, après configuration, des paramètres de configuration permettant à chaque capteur de commander certains actionneurs, lesquels paramètres de configuration sont affectés depuis une unité centrale de configuration (16), **caractérisé en ce qu'**il comporte, pour la configuration d'un nouveau module fonctionnel introduit sur le réseau, les étapes successives suivantes :
A) on identifie physiquement le nouveau module fonctionnel sur le réseau **par l'enfoncement d'un bouton-poussoir porté par ledit module fonctionnel ;**
B) le nouveau module fonctionnel émet, suite à son identification physique, **par l'enfoncement dudit bouton-poussoir,** un message d'identification à l'attention de l'unité centrale de configuration ;
C) à la réception dudit message d'identification, l'unité centrale de configuration (16) crée un représentant logique du nouveau module fonctionnel ;
D) on affecte, à partir de l'unité centrale de configuration (16), des paramètres de configuration au représentant logique du nouveau module fonctionnel, **les paramètres de configuration de chaque module fonctionnel comportant au moins une adresse de groupe, permettant à chaque capteur de commander les actionneurs ayant la même adresse de groupe que lui ;**
E) l'unité centrale de configuration charge dans le nouveau module fonctionnel les paramètres de configuration affectés au représentant logique dudit nouveau module fonctionnel ; et
**en ce que l'affectation, à l'étape D), d'une adresse de groupe au représentant logique du capteur ou de l'actionneur formant le nouveau module fonctionnel comporte les étapes suivantes :**
(i) on sélectionne le représentant logique d'un capteur à considérer,
(ii) on sélectionne les représentants logiques d'actionneurs devant être commandés par ledit capteur considéré, et
(iii) l'unité centrale de configuration affecte au représentant logique du capteur considéré et aux représentants logiques desdits actionneurs la même adresse de groupe.

2. Procédé selon la revendication 1, **caractérisé en ce que**, après la réception dudit message d'identification, l'unité centrale de configuration (16) affecte et charge dans le nouveau module fonctionnel une adresse physique permettant la communication ultérieure entre le nouveau module fonctionnel et l'unité centrale de configuration.

3. Procédé selon la revendication 1 ou 2, **caractérisé en ce que**, après la sélection, aux étapes (i) et (ii), d'un capteur et des actionneurs devant être commandés par ledit capteur, on sélectionne une fonction à remplir par lesdits actionneurs sous la commande dudit capteur, laquelle fonction est ensuite chargée dans lesdits capteurs et actionneurs par l'unité centrale de configuration.

4. Procédé selon la revendication 3, **caractérisé en ce qu'**il comporte, pour la configuration de plusieurs nouveaux modules fonctionnels les étapes successives suivantes :
a) on met en oeuvre, pour chaque nouveau capteur, les étapes A), B) et C) d'identification physique, d'émission d'un message d'identification et de création d'un représentant logique du nouveau capteur ;
b) pour chaque capteur, on effectue les étapes b₀), à b₃) suivantes :
- b₀) on sélectionne le représentant logique du capteur à considérer,
- b₁) on met en oeuvre pour les actionneurs devant être commandés par ledit capteur considéré les étapes A), B) et C) d'identification physique, d'émission d'un message d'identification, et si l'actionneur est identifié physiquement pour la première fois de création d'un représentant logique de celui-ci, ces étapes conduisant à la sélection des représentants logiques des actionneurs devant être commandés par le capteur considéré,
- b₂) l'unité centrale de configuration affecte une même adresse de groupe au représentant logique du capteur considéré et aux représentants logiques des actionneurs sélectionnés devant être commandés par le capteur considéré,
- b₃) on sélectionne depuis l'unité centrale de configuration une fonction à remplir par lesdits actionneurs sélectionnés sous la commande dudit capteur, cette fonction étant affectée aux représentants logiques du capteur et des actionneurs ;
c) l'unité centrale de configuration charge, dans les capteurs et les actionneurs, les adresses de groupe et les fonctions affectées à leur représentant logique.

5. Procédé selon la revendication 3, **caractérisé en ce qu'**il comporte, pour la configuration de plusieurs nouveaux modules fonctionnels les étapes successives suivantes :
a) on met en oeuvre, pour chaque nouveau capteur et chaque nouvel actionneur, les étapes A), B) et C) d'identification physique, d'émission d'un message d'identification et de création d'un représentant logique du nouveau capteur ou du nouvel actionneur ;
b) pour chaque capteur, on effectue les étapes b₀) à b₃) suivantes :
- b₀) on sélectionne le représentant logique du capteur à considérer,
- b₁) on sélectionne les représentants logiques des actionneurs devant être commandés par ledit capteur considéré,
- b₂) l'unité centrale de configuration affecte une même adresse de groupe au représentant logique du capteur considéré et aux représentants logiques des actionneurs sélectionnés devant être commandés par ledit capteur considéré,
- b₃) on sélectionne, depuis l'unité centrale de configuration une fonction à remplir par lesdits actionneurs sélectionnés sous la commande dudit capteur, cette fonction étant affectée aux représentants logiques du capteur et des actionneurs ;
c) l'unité centrale de configuration charge dans les capteurs et les actionneurs les adresses de groupe et les fonctions affectées à leur représentant logique.

6. Procédé selon la revendication 4 ou 5, **caractérisé en ce que**, lors de l'étape de sélection et d'affectation d'une fonction à remplir aux représentants logiques du capteur et des actionneurs sélectionnés, il comporte les étapes suivantes :
i) on attribue au capteur considéré une unique fonction de commande des actionneurs sélectionnés ;
ii) on affecte aux représentants logiques de tous les actionneurs sélectionnés la même unique fonction attribuée au capteur considéré.

7. Procédé selon l'une quelconque des revendications 4 à 6, **caractérisé en ce que** l'on attribue un numéro d'ordre à chaque représentant logique d'un capteur lors de la création du représentant logique et **en ce que** les étapes effectuées pour chaque capteur sont réalisées en fonction de ce numéro d'ordre, ledit capteur étant désigné par ledit numéro d'ordre.

8. Dispositif de configuration d'un réseau de communication, lequel réseau comporte des modules fonctionnels formés par des capteurs (12) et des actionneurs (14) communiquant entre eux directement par l'intermédiaire d'un bus de communication (10), les capteurs (12) et les actionneurs (14) comportant chacun, après configuration, des paramètres de configuration permettant à chaque capteur de commander certains actionneurs, le dispositif comportant une unité centrale de configuration (16) pour l'affectation des paramètres de configuration, **caractérisé en ce qu'**il comporte, pour la configuration d'un nouveau module fonctionnel introduit sur le réseau :
A) des moyens pour identifier physiquement le nouveau module fonctionnel sur le réseau, ces moyens comportant un bouton-poussoir d'identification prévu dans chaque module fonctionnel ;
B) des moyens d'émission par le nouveau module fonctionne, suite à son identification physique par l'enfoncement dudit bouton-poussoir, d'un message d'identification à l'attention de l'unité centrale de configuration ;
C) des moyens de création, à la réception dudit message d'identification, par l'unité centrale de configuration d'un représentant logique du nouveau module fonctionnel ;
D) des moyens d'affectation, par l'unité centrale de configuration, de paramètres de configuration au représentant logique du nouveau module fonctionnel, les paramètres de configuration de chaque module fonctionnel comportant au moins une adresse de groupe, permettant à chaque capteur de commander les actionneurs ayant la même adresse de groupe que lui ;
E) des moyens de chargement, dans le nouveau module fonctionnel par l'unité centrale de configuration, des paramètres de configuration affectés au représentant logique dudit nouveau module fonctionnel ; et **en ce qu'**il comporte :
(i) des moyens intégrés à l'unité centrale de configuration pour sélectionner le représentant logique d'un capteur à considérer,
(ii) des moyens pour sélectionner les représentants logiques d'actionneurs devant être commandés par ledit capteur considéré,
(iii) des moyens intégrés à l'unité centrale de configuration pour affecter au représentant logique du capteur considéré et aux représentants logiques desdits actionneurs une même adresse de groupe.

9. Dispositif selon la revendication 8, **caractérisé en ce que** l'unité centrale de configuration (16) comporte un micro-contrôleur (50) associé, d'une part, à une unité de couplage (52) pour la transmission d'informations entre le micro-contrôleur (50) et les capteurs (12) et les actionneurs (14) présents sur le bus et, d'autre part, à un panneau de configuration (64) portant une interface utilisateur.

10. Dispositif selon la revendication 8 ou 9, **caractérisé en ce que** l'unité centrale de configuration comporte des moyens pour sélectionner une fonction à remplir par lesdits actionneurs sous la commande dudit capteur, et des moyens pour charger ladite fonction dans lesdits capteurs et actionneurs.

11. Dispositif selon la revendication 10, **caractérisé en ce qu'**il comporte pour la configuration de plusieurs nouveaux modules fonctionnels :
a) des moyens pour mettre en oeuvre, pour chaque nouveau capteur, l'identification physique, l'émission d'un message d'identification et la création d'un représentant logique du nouveau capteur ;
b) des moyens pour effectuer, pour chaque capteur :
- b₀) une sélection du représentant logique du capteur à considérer,
- b₁) une mise en oeuvre pour les actionneurs devant être commandés par ledit capteur considéré de l'identification physique, de l'émission d'un message d'identification, et si l'actionneur est identifié physiquement pour la première fois, de la création d'un représentant logique de celui-ci, cette mise en oeuvre conduisant à la sélection des représentants logiques des actionneurs devant être commandés par le capteur considéré,
- b₂) une affectation par l'unité centrale de configuration d'une même adresse de groupe au représentant logique du capteur considéré et aux représentants logiques des actionneurs sélectionnés devant être commandés par le capteur considéré,
- b₃) une sélection depuis l'unité centrale de configuration, d'une fonction à remplir par lesdits actionneurs sélectionnés sous la commande dudit capteur, cette fonction étant affectée aux représentants logiques du capteur et des actionneurs ;
c) des moyens de chargement par l'unité centrale de configuration dans les capteurs et les actionneurs des adresses de groupe et des fonctions affectées à leur représentant logique.

12. Dispositif selon la revendication 10, **caractérisé en ce qu'**il comporte, pour la configuration de plusieurs nouveaux modules fonctionnels :
a) des moyens pour mettre en oeuvre pour chaque nouveau capteur et chaque nouvel actionneur, l'identification physique, l'émission d'un message d'identification et la création d'un représentant logique du nouveau capteur et du nouvel actionneur ;
b) des moyens pour effectuer pour chaque capteur :
- b₀) une sélection du représentant logique du capteur à considérer,
- b₁) une sélection des représentants logiques des actionneurs devant être commandés par ledit capteur considéré,
- b₂) une affectation par l'unité centrale de configuration d'une même adresse de groupe au représentant logique du capteur considéré et aux représentants logiques des actionneurs sélectionnés devant être commandés par le capteur considéré,
- b₃) une sélection depuis l'unité centrale de configuration, d'une fonction à remplir par lesdits actionneurs sélectionnés sous la commande dudit capteur, cette fonction étant affectée aux représentants logiques des capteurs et des actionneurs ;
c) des moyens de chargement par l'unité centrale de configuration dans les capteurs et les actionneurs des adresses de groupe et des fonctions affectées à leur représentant logique.

13. Dispositif selon la revendication 11 ou 12, **caractérisé en ce que** l'unité centrale de configuration comporte :
i) des moyens pour attribuer au capteur considéré une unique fonction de commande des actionneurs sélectionnés ;
ii) des moyens pour affecter aux représentant logiques de tous les actionneurs sélectionnés la même unique fonction attribuée au capteur considéré.

14. Dispositif selon la revendication 13, **caractérisé en ce que** les moyens pour attribuer au capteur une unique fonction de commande des actionneurs sélectionnés comportent un panneau de configuration (64) muni de boutons-poussoirs (86A, 86B, 86C, 86D, 86E) pour la sélection d'une fonction prédéterminée, chaque bouton-poussoir étant associé à au moins une fonction.

15. Dispositif selon la revendication 14, **caractérisé en ce qu'**il comporte des moyens d'identification du type d'actionneur sélectionné, et **en ce qu'**il comporte des moyens pour affecter aux boutons-poussoirs (86A, 86B, 86C, 86D, 86E) des fonctions sélectionnables compatibles avec le type d'actionneur sélectionné.

16. Dispositif selon l'une quelconque des revendications 8 à 15, **caractérisé en ce que** l'unité centrale de configuration comporte des moyens pour affecter et charger une adresse physique dans le nouveau module fonctionnel identifié, après la réception dudit message d'identification.

17. Dispositif selon l'une quelconque des revendications 8 à 16, **caractérisé en ce que** l'unité centrale de configuration (16) comporte des moyens de numérotation des capteurs lors de leur identification physique et **en ce qu'**elle comporte des moyens de sélection des numéros attribués pour sélectionner le capteur à considérer.

18. Dispositif selon la revendication 17, **caractérisé en ce que** l'unité centrale de configuration (16) comporte des moyens d'affichage (82) des numéros attribués aux capteurs.

19. Dispositif selon l'une quelconque des revendications 8 à 18, **caractérisé en ce que** l'unité centrale de configuration (16) comporte des moyens de mémorisation (56) pour mémoriser les paramètres de configuration affectés avant leur chargement dans les capteurs ou les actionneurs.

20. Réseau de communication comportant des capteurs (12) et des actionneurs (14) communiquant entre eux directement par l'intermédiaire d'un bus de communication (10), les capteurs et les actionneurs comportant chacun, après configuration, des paramètres de configuration permettant à chaque capteur de commander les actionneurs, **caractérisé en ce qu'**il comporte un dispositif de configuration selon l'une quelconque des revendications 8 à 19.

21. Réseau selon la revendication 20, **caractérisé en ce que** chaque actionneur (14) comporte un module de sortie (30, 34, 38) relié à un organe à commander (32, 36, 40), lequel module de sortie comporte des moyens de commande de l'organe à commander et de moyens (B) permettant l'identification physique de l'actionneur sur le réseau, et **en ce que** lesdits modules de sortie et ladite unité centrale de configuration (16) sont disposés au voisinage immédiat les uns des autres, notamment sur un même tableau électrique (41), les rendant ainsi accessibles simultanément.

## Patentansprüche

1. Verfahren zum Konfigurieren eines Kommunikationsnetzes, das Funktionsmodule umfasst, die aus Signaleingabegliedern (12) und Betätigungsgliedern (14) gebildet sind, die direkt miteinander über einen Kommunikationsbus (10) kommunizieren, wobei die Signaleingabeglieder (12) und die Betätigungsglieder (14) nach der Konfiguration jeweils Konfigurationsparameter aufweisen, die es jedem Signaleingabeglied erlauben, gewisse Betätigungsglieder anzusteuern, welche Konfigurationsparameter von einer zentralen Konfigurationseinheit (16) zugeordnet werden, **dadurch gekennzeichnet, dass** es zum Konfigurieren eines neuen Funktionsmoduls, der in das Netz eingefügt wird, die folgenden Schritte umfasst:
A) Man identifiziert physikalisch den neuen Funktionsmodul am Netz über das Drücken einer Drucktaste, die der besagte Funktionsmodul trägt,
B) der neue Funktionsmodul gibt nach seiner physikalischen Identifikation durch das Drücken der besagten Drucktaste eine Identifikationsmitteilung an die zentrale Konfigurationseinheit aus,
C) auf den Empfang dieser Identifikationsmitteilung erzeugt die zentrale Konfigurationseinheit (16) einen logischen Repräsentanten des neuen Funktionsmoduls,
D) ausgehend von der zentralen Konfigurationseinheit (16) ordnet man Konfigurationsparameter dem logischen Repräsentanten des neuen Funktionsmoduls zu, wobei die Konfigurationsparameter jedes Funktionsmoduls wenigstens eine Gruppenadresse umfassen, die es jedem Signaleingabeglied erlaubt, Betätigungsglieder anzusteuern, die dieselbe Gruppenadresse wie das Signaleingabeglied haben,
E) die zentrale Konfigurationseinheit lädt die Konfigurationsparameter, die dem logischen Repräsentanten des neuen Funktionsmoduls zugeordnet sind, in den neuen Funktionsmodul, und
dass die Zuordnung im Schritt D) einer Gruppenadresse zum logischen Repräsentanten des Signaleingabegliedes oder des Betätigungsgliedes, das den neuen Funktionsmodul bildet, die folgenden Schritte umfasst:
(i) Man wählt den logischen Repräsentanten eines betreffenden Signaleingabegliedes,
(ii) man wählt die logischen Repräsentanten der Betätigungsglieder, die durch das besagte betreffende Signaleingabeglied anzusteuern sind, und
(iii) die zentrale Konfigurationseinheit ordnet dem logischen Repräsentanten des betreffenden Signaleingabegliedes und den logischen Repräsentanten der besagten Betätigungsglieder die selbe Gruppenadresse zu.

2. Verfahren nach Anspruch 1, **dadurch gekennzeichnet, dass** nach dem Empfang der besagten Identifikationsmitteilung die zentrale Konfigurationseinheit (16) dem neuen Funktionsmodul eine physikalische Adresse zuordnet und diese Adresse in den neuen Funktionsmodul lädt, die eine spätere Kommunikation zwischen dem neuen Funktionsmodul und der zentralen Konfigurationseinheit erlaubt.

3. Verfahren nach Anspruch 1 oder 2, **dadurch gekennzeichnet, dass** man nach der Wahl des Signaleingabegliedes und der Betätigungsglieder, die durch das besagte Signaleingabeglied anzusteuern sind in den Schritte (i) und (ii) eine von den Betätigungsgliedern unter der Steuerung des besagten Signaleingabegliedes auszuführende Funktion wählt, welche Funktion dann in die besagten Signaleingabeglieder und Betätigungsglieder durch die zentral Konfigurationseinheit geladen wird.

4. Verfahren nach Anspruch 3, **dadurch gekennzeichnet, dass** es zum Konfigurieren mehrerer neuer Funktionsmodule die folgenden Schritte umfasst:
a) Man führt für jedes neue Signaleingabeglied die Schritte A, B und C der physikalischen Identifikation, der Ausgabe einer Identifikationsmitteilung und der Erzeugung eines logischen Repräsentanten des neuen Signaleingabegliedes aus,
b) man führt für jedes Signaleingabeglied die folgenden Schritte b₀ bis b₃ aus:
- b₀) man wählt einen logischen Repräsentanten des betreffenden Eingabegliedes,
- b₁) man führt für die Betätigungsglieder, die von dem besagten betreffenden Signaleingabeglied anzusteuern sind, die Schritte A, B und C der physikalischen Identifikation, der Ausgabe einer Identifikationsmitteilung und dann, wenn das Betätigungsglied physikalisch zum ersten Mal identifiziert wird, der Erzeugung eines logischen Repräsentanten dieses Gliedes aus, welche Schritte zur Auswahl logischer Repräsentanten der Betätigungsglieder führen, die durch das betreffende Signaleingabeglied anzusteuern sind,
- b₂) die zentrale Konfigurationseinheit ordnet die selbe Gruppenadresse dem logischen Repräsentanten des betreffenden Signaleingabegliedes und den logischen Repräsentanten der gewählten Betätigungsglieder zu, die von dem betreffenden Signaleingabeglied anzusteuern sind,
- b₃) man wählt von der zentralen Konfigurationseinheit eine Funktion, die von den besagten gewählten Betätigungsgliedern unter der Steuerung des besagten Signaleingabegliedes auszuführen ist, welche Funktion den logischen Repräsentanten des Signaleingabegliedes und der Betätigungsglieder zugeordnet wird, und
c) die zentrale Konfigurationseinheit lädt die Gruppenadressen und die Funktionen, die ihren logischen Repräsentanten zugeordnet sind, in die Signaleingabeglieder und die Betätigungsglieder.

5. Verfahren nach Anspruch 3, **dadurch gekennzeichnet, dass** es zur Konfiguration von mehreren neuen Funktionsmodulen die folgenden Schritte umfasst:
a) man führt für jedes neue Signaleingabeglied und für jedes neue Betätigungsglied die Schritte A, B und C der physikalischen Identifikation, der Ausgabe einer Identifikationsmitteilung und der Erzeugung eines logischen Repräsentanten des Signaleingabegliedes oder des neuen Betätigungsgliedes aus,
b) man führt für jedes Signaleingabeglied die folgenden Schritte b₀ bis b₃ aus:
- b₀) man wählt den logischen Repräsentanten des betreffenden Signaleingabegliedes,
- b₁) man wählt die logischen Repräsentanten der Betätigungsglieder, die durch das betreffende besagte Signaleingabeglied anzusteuern sind,
- b₂) die zentrale Konfigurationseinheit ordnet die selbe Gruppenadresse dem logischen Repräsentanten des betreffenden Signaleingabegliedes und den logischen Repräsentanten der gewählten Betätigungsglieder zu, die durch das besagte betreffende Signaleingabeglied anzusteuern sind,
- b₃) man wählt von der zentralen Konfigurationseinheit eine Funktion, die durch die gewählten besagten Betätigungsglieder unter der Steuerung des besagten Signaleingabegliedes auszuführen ist, welche Funktion den logischen Repräsentanten des Signaleingabegliedes und der Betätigungsglieder zugeordnet wird, und
c) die zentrale Konfigurationseinheit lädt die Gruppenadressen und die Funktionen, die ihren logischen Repräsentanten zugeordnet sind, in die Signaleingabeglieder und die Betätigungsglieder.

6. Verfahren nach Anspruch 4 oder 5, **dadurch gekennzeichnet, dass** es bei dem Schritt der Wahl und der Zuordnung einer auszuführenden Funktion zu den logischen Repräsentanten des Signaleingabegliedes und der gewählten Betätigungsglieder die folgenden Schritte umfasst:
i) Man schreibt dem betreffenden Signaleingabeglied eine einzelne Funktion zum Steuerung der gewählten Betätigungsglieder zu,
ii) man ordnet den logischen Repräsentanten aller gewählten Betätigungsglieder die einzelne Funktion zu, die dem betreffenden Signaleingabeglied zugeschrieben wurde.

7. Verfahren nach einem der Ansprüche 4 bis 6, **dadurch gekennzeichnet, dass** man eine Ordnungszahl jedem logischen Repräsentanten eines Signaleingabegliedes während der Erzeugung des logischen Repräsentanten zuschreibt, und dass die für jedes Signaleingabeglied ausgeführten Schritte in Abhängigkeit von der Ordnungszahl ausgeführt werden, wobei das besagte Signaleingabeglied durch die besagte Ordnungszahl bezeichnet wird.

8. Vorrichtung zum Konfigurieren eines Kommunikationsnetzes, welches Netz Funktionsmodute umfasst, die aus Signaleingabegliedern (12) und Betätigungsgliedern (14) gebildet sind, die direkt miteinander über einen Kommunikationsbus (10) kommunizieren, wobei die Signaleingabeglieder (12) und die Betätigungsglieder (14) nach der Konfiguration jeweils Konfigurationsparameter aufweisen, die es jedem Signaleingabeglied erlauben, gewisse Betätigungsglieder anzusteuern, welche Vorrichtung eine zentrale Konfigurationseinheit (16) zum Zuordnen der Konfigurationsparameter umfasst, **dadurch gekennzeichnet, dass** sie zum Konfigurieren eines neuen Funktionsmoduls, der in das Netz eingeführt wird,
A) Einrichtungen zum physikalischen Identifizieren des neuen Funktionsmoduls am Netz, welche Einrichtungen eine Identifikationsdrucktaste umfassen, die an jedem Funktionsmodul vorgesehen ist,
B) Einrichtungen, die von jedem neuen Funktionsmodul anschließend an seine physikalische Identifikation durch Drücken der besagte Drucktaste eine Identifikationsmitteilung an die zentrale Konfigurationseinrichtung ausgeben,
C) Einrichtungen, die auf den Empfang der besagten Identifikationsmitteilung von der zentralen Konfigurationseinheit einen logischen Repräsentanten des neuen Funktionsmoduls erzeugen,
D) Einrichtungen, die von der zentralen Konfigurationseinheit Konfigurationsparameter dem logischen Repräsentanten des neuen Funktionsmoduls zuordnen, wobei die Konfigurationsparameter jedes Funktionsmoduls wenigstens eine Gruppenadresse umfassen, die es jedem Signaleingabeglied erlaubt, Betätigungsglieder anzusteuern, die die gleiche Gruppenadresse wie das Signaleingabeglied haben,
E) Einrichtungen, die von der zentralen Konfigurationseinheit in den neuen Funktionsmodul die Konfigurationsparameter laden, die dem logischen Repräsentanten des neuen Funktionsmoduls zugeordnet wurden, umfasst,
und dass sie
(i) Einrichtungen zum Wählen des logischen Repräsentanten eines betreffenden Signaleingabegliedes, die in die zentrale Konfigurationseinheit integriert sind,
(ii) Einrichtungen zum Wählen der logischen Repräsentanten der Betätigungsglieder, die von dem besagten betreffenden Signaleingabeglied anzusteuern sind.
(iii) Einrichtungen zum Zuordnen derselben Gruppenadresse zu dem logischen Repräsentanten des betreffenden Signaleingabegliedes und zu den logischen Repräsentanten der besagten Betätigungsglieder, die in die zentrale Konfigurationseinheit integriert sind, aufweist.

9. Vorrichtung nach Anspruch 8, **dadurch gekennzeichnet, dass** die zentrale Konfigurationseinheit (16) eine Mikrosteuerung (50) umfasst, die einerseits mit einer Kopplungseinheit (52) zum Übertragen von Informationen zwischen der Mikrosteuerung (50) und den Signaleingabegliedern (12) und den Betätigungsgliedern (14), die am Bus vorhanden sind, und andererseits mit einer Konfigurationstafel (64) verbunden ist, die eine Anwender-Schnittstelle trägt.

10. Vorrichtung nach Anspruch 8 oder 9, **dadurch gekennzeichnet, dass** die zentrale Konfigurationseinheit Einrichtungen zum Wählen einer von den besagten Betätigungsgliedern unter der Steuerung des besagten Signaleingabegliedes auszuführenden Funktion und Einrichtungen zum Laden der besagten Funktion in die besagten Signaleingabeglieder und in die besagten Betätigungsglieder umfasst.

11. Vorrichtung nach Anspruch 10, **dadurch gekennzeichnet, dass** sie zum Konfigurieren mehrerer neuer Funktionsmodule
a) Einrichtungen, die für jedes neue Signaleingabeglied die physikalische Identifikation, die Ausgabe einer Identifikationsmitteilung und die Erzeugung eines logischen Repräsentanten des neuen Signaleingabegliedes bewirken,
b) Einrichtungen, die für jedes Signaleingabeglied
- b₀) eine Wahl des logischen Repräsentanten des betreffenden Signaleingabegliedes bewirken,
- b₁) für die Betätigungsglieder, die von dem besagten betreffenden Signaleingabeglied anzusteuern sind, die physikalische Identifikation, die Ausgabe einer Identifikationsmitteilung und dann, wenn das Betätigungsglied physikalisch zum ersten Mal identifiziert wird, die Erzeugung eines logischen Repräsentanten dieses Gliedes bewirken, wobei das zu einer Auswahl der logischen Repräsentanten der Betätigungsglieder führt, die von dem betreffenden Signaleingabeglied anzusteuern sind,
- b₂) eine Zuordnung von der zentralen Konfigurationseinheit derselben Gruppenadresse zum logischen Repräsentanten des betreffenden Signaleingabegliedes und zu den logischen Repräsentanten der gewählten Betätigungsglieder bewirken, die von dem betreffenden Signaleingabeglied anzusteuern sind,
- b₃) eine Wahl von der zentralen Konfigurationseinheit einer Funktion bewirken, die von den gewählten Betätigungsgliedern unter der Steuerung des besagten Signaleingabegliedes auszuführen ist, welche Funktion den logischen Repräsentanten des Signaleingabegliedes und der Betätigungsglieder zugeordnet wird, und
c) Einrichtungen, die von der zentralen Konfigurationseinheit die Gruppenadressen und die ihren logischen Repräsentanten zugeordneten Funktionen in die Signaleingabeglieder und die Betätigungsglieder laden, umfasst.

12. Vorrichtung nach Anspruch 10, **dadurch gekennzeichnet, dass** sie zum Konfigurieren von mehreren neuen Funktionsmodulen
a) Einrichtungen, die für jedes neue Signaleingabeglied und für jedes neue Betätigungsglied die physikalische Identifikation, die Ausgabe einer Identifikationsmitteilung und die Erzeugung eines logischen Repräsentanten des neuen Signaleingabegliedes und des neuen Betätigungsgliedes ausführen,
b) Einrichtungen, die für jedes Signaleingabeglied
- b₀) eine Wahl des logischen Repräsentanten des betreffenden Signaleingabegliedes bewirken,
- b₁) eine Wahl der logischen Repräsentanten der Betätigungsglieder bewirken, die von dem besagten betreffenden Signaleingabeglied anzusteuern sind,
- b₂) eine Zuordnung von der zentralen Konfigurationseinheit derselben Gruppenadresse zu dem logischen Repräsentanten des betreffenden Signaleingabegliedes und zu den logischen Repräsentanten der gewählten Betätigungsglieder, bewirken die von dem betreffenden Signaleingabeglied anzusteuern sind,
- b₃) eine Wahl von der zentralen Konfigurationseinheit einer Funktion bewirken, die von den gewählten besagten Betätigungsgliedern unter der Steuerung des besagten Signaleingabegliedes auszuführen ist, welche Funktion den logischen Repräsentanten der Signaleingabeglieder und der Betätigungsglieder zugeordnet wird, und
c) Einrichtungen, die von der zentralen Konfigurationseinheit in die Signaleingabeglieder und in die Betätigungsglieder die Gruppenadressen und die Funktionen laden, die ihrem logischen Repräsentanten zugeordnet sind, umfasst.

13. Vorrichtung nach Anspruch 11 oder 12, **dadurch gekennzeichnet, dass** die zentrale Konfigurationseinheit
i) Einrichtungen, die dem betreffenden Signaleingabeglied eine einzelne Funktion zum Steuern der gewählten Betätigungsglieder zuschreiben,
ii) Einrichtungen, die den logischen Repräsentanten aller gewählten Betätigungsglieder die gleiche einzelne Funktion zuordnen, die dem betreffenden Signaleingabeglied zugeschrieben ist.

14. Vorrichtung nach Anspruch 13, **dadurch gekennzeichnet, dass** die Einrichtungen, die dem Signaleingabeglied eine einzelne Funktion zum Steuern der gewählten Betätigungsfelder zuschreiben, eine Konfigurationstafel (64) umfassen, die mit Drucktasten (86A, 86B, 86C, 86D, 86E) zum Wählen einer bestimmten Funktion ausgerüstet ist, wobei jede Drucktaste wenigstens einer Funktion zugeordnet ist.

15. Vorrichtung nach Anspruch 14, **dadurch gekennzeichnet, dass** sie Einrichtungen zum Identifizieren der Art des gewählten Betätigungsgliedes und Einrichtungen zum Zuordnen wählbarer Funktionen zu den Drucktasten (86A, 86B, 86C, 86D, 86E) umfasst, die mit der Art des gewählten Betätigungsgliedes kompatibei sind.

16. Vorrichtung nach einem der Ansprüche 8 bis 15, **dadurch gekennzeichnet, dass** die zentrale Konfigurationseinheit Einrichtungen umfasst, die eine physikalische Adresse dem identifizierten neuen Funktionsmodul zuordnen und in diesen Modul laden, nachdem die besagte Identifikationsmitteilung empfangen worden ist.

17. Vorrichtung nach einem Ansprüche 8 bis 16, **dadurch gekennzeichnet, dass** die zentrale Konfigurationseinheit (16) Einrichtungen umfasst, die die Signaleingabeglieder während Ihrer physikalischen Identifikation nummerieren, und dass sie Einrichtungen umfasst, die zugeordnete Nummern wählen, um ein zu betrachtendes Signaleingabeglied zu wählen.

18. Vorrichtung nach Anspruch 17, **dadurch gekennzeichnet, dass** die zentrale Konfigurationseinheit (16) Einrichtungen (82) zum Anzeigen der den Signaleingabegliedern zugeordneten Nummern umfasst.

19. Vorrichtung nach einem der Ansprüche 8 bis 18, **dadurch gekennzeichnet, dass** die zentrale Konfigurationseinheit (16) Speichereinrichtungen (56) zum Speichern der zugeordneten Konfigurationsparameter vor ihrem Laden in die Signaleingabeglieder oder in die Betätigungsglieder umfasst.

20. Kommunikationsnetz mit Signaleingabegliedern (12) und Betätigungsgliedern (14), die direkt miteinander über einen Kommunikationsbus (10) kommunizieren, wobei die Signaleingabeglieder und die Betätigungsglieder jeweils nach ihrer Konfiguration Konfigurationsparameter aufweisen, die es jedem Signaleingabeglied erlauben, die Betätigungsglieder anzusteuern, **dadurch gekennzeichnet, dass** es eine Vorrichtung zum Konfigurieren nach einem Ansprüche 8 bis 19 umfasst.

21. Netz nach Anspruch 20, **dadurch gekennzeichnet, dass** jedes Betätigungsglied (14) einen Ausgangsmodul (30, 34, 38) umfasst, der mit einem anzusteuernden Eiement (32, 36, 40) verbunden ist, welche Ausgangsmodul Einrichtungen zum Ansteuern des anzusteuernden Elementes und Einrichtungen (B) umfasst, die eine physikalische Identifikation des Betätigungsgliedes am Netz erlauben, und dass die Ausgangsmodule und die besagte zentrale Konfigurationseinheit (16) in unmittelbarer Nähe zueinander, insbesondere auf derselben elektrischen Schalttafel (41), vorgesehen sind, so dass sie gleichzeitig zugänglich sind.

## Claims

1. Method of configuring a communication network comprising functional modules formed by sensors (12) and actuators (14) communicating with one another directly by means of a communication bus (10), the sensors (12) and actuators (14) each having, after configuration, configuration parameters enabling each sensor to control certain actuators, the said configuration parameters being allocated from a central configuration unit (16), **characterised in that** it comprises, for configuring a new functional module introduced onto the network, the following successive steps:
A) the new functional module on the network is identified physically by pressing a push button carried by the said functional module;
B) the new functional module, following its physical identification by the pressing of the said push button, emits an identification message for the attention of the central configuration unit;
C) on reception of the said identification message, the central configuration unit (16) creates a logic representative of the new functional module;
D) from the central configuration unit (16), configuration parameters are allocated to the logic representative of the new functional module, the configuration parameters of each functional module comprising at least one group address enabling each sensor to control the actuators having the same group address as it;
E) the central configuration unit loads into the functional module the configuration parameters allocated to the logic representative of the said new functional module; and
**in that** the allocation, at step D) of a group address to the logic representative of the sensor or actuator forming the new functional module comprises the following steps:
(i) the logic representative of a sensor to be considered is selected,
(ii) the logic representatives of actuators that are to be controlled by the said sensor considered are selected, and
(iii) the central configuration unit allocates the same group address to the logic representative of the sensor considered and to the logic representatives of the said actuators.

2. Method according to claim 1, **characterised in that**, after the reception of the said identification message, the central configuration unit (16) allocates and loads into the new functional module a physical address allowing subsequent communication between the new functional module and the central configuration unit.

3. Method according to claim 1 or 2, **characterised in that**, after the selection at steps (i) and (ii) of a sensor and actuators that are to be controlled by the said sensor, a function to be fulfilled by the said actuators under the command of the said sensor is selected, the said function next being loaded into the sensors and actuators by the central configuration unit.

4. Method according to claim 3, **characterised in that** it comprises, for the configuration of several functional modules, the following successive steps:
a) for each new sensor, the steps A), B) and C) of physical identification, of sending of an identification message and of creation of a logic representative of the new sensor are implemented:
b) for each sensor, the following steps b₀) to b₃) are performed:
- b₀) the logic representative of the sensor to be considered is selected,
- b₁) for the actuators that are to be controlled by the said sensor considered, the steps A), B) and C) of physical identification, of sending of an identification message and, if the actuator is physically identified for the first time, of creating a logic representative thereof are implemented, these steps leading to the selection of the logic representatives of the actuators that are to be controlled by the sensor considered,
- b₂) the central configuration unit allocates one and the same group address to the logic representative of the sensor considered and to the logic representatives of the selected actuators that are to be controlled by the sensor considered,
- b₃) from the central configuration unit, a function to be fulfilled by the said selected actuators under the control of the said sensor is selected, this function being allocated to the logic representatives of the sensor and actuators;
c) the central configuration unit loads, in the sensors and actuators, the group addresses and the functions allocated to their logic representative.

5. Method according to claim 3, **characterised in that** it comprises, for the configuration of several new functional modules, the following successive steps:
a) for each new sensor and each new actuator, the steps A), B) and C) of physical identification, of sending of an identification message and of creation of a logic representative of the new sensor or new actuator are implemented;
b) for each sensor, the following steps b₀) to b₃) are performed:
- b₀) the logic representative of the sensor to be considered is selected,
- b₁) the logic representatives of the actuators that are to be controlled by the said sensor considered are selected,
- b₂) the central configuration unit allocates one and the same group address to the logic representative of the sensor considered and to the logic representatives of the selected actuators that are to be controlled by the sensor considered,
- b₃) from the central configuration unit, a function to be fulfilled by the said selected actuators under the control of the said sensor is selected, this function being allocated to the logic representatives of the sensor and actuators;
c) the central configuration unit loads in the sensors and actuators the group addresses and the functions allocated to their logic representative.

6. Method according to claim 4 or 5, **characterised in that**, during the step of selection and allocation of a function to be fulfilled to the logic representatives of the sensor and actuators selected, it comprises the following steps:
i) a unique function of controlling the selected actuators is allocated to the sensor considered,
ii) the same unique function allocated to the sensor considered is allocated to the logic representatives of all the actuators selected.

7. Method according to any one of claims 4 to 6, **characterised in that** a serial number is allocated to each logic representative of a sensor when the logic representative is created, and **in that** the steps performed for each sensor are performed according to this serial number, the sensor being designated by the said serial number.

8. Device for configuring a communication network, the said network comprising functional modules formed by sensors (12) and actuators (14) communicating with one another directly by means of a communication bus (10), the sensors (12) and actuators (14) each comprising, after configuration, configuration parameters enabling each sensor to control certain actuators, the device comprising a central configuration unit (16) for the allocation of the configuration parameters, **characterised in that** it comprises, for the configuration of a new functional module introduced onto the network:
A) means for physically identifying the new functional module on the network, these means comprising an identification push button provided in each functional module;
B) means for the emission, by the new functional module, following its physical identification by the pressing of the said push button, of an identification message for the attention of the central configuration unit;
C) means for the creation, on reception of the said identification message, by the central configuration unit, of a logic representative of the new functional module;
D) means for the allocation, by the central configuration unit, of configuration parameters to the logic representative of the new functional module, the configuration parameters of each functional module comprising at least one group address, enabling each sensor to control the actuators having the same group address as itself;
E) means for the loading, in the new functional module, by the central configuration unit, of the configuration parameters allocated to the logic representative of the said new functional module; and
**in that** it comprises:
(i) means integrated in the central configuration unit for selecting the logic representative of a sensor to be considered,
(ii) means for selecting the logic representatives of actuators that are to be controlled by the said sensor considered,
(iii) means integrated in the central configuration unit for allocating one and the same group address to the logic representative of the sensor considered and to the logic representatives of the said actuators.

9. Device according to claim 8, **characterised in that** the central configuration unit (16) comprises a microcontroller (50) associated firstly with a coupling unit (52) for the transmission of information between the microcontroller (50) and the sensors (12) and actuators (14) present on the bus and secondly a configuration panel(64) carrying a user interface.

10. Device according to claim 8 or 9, **characterised in that** the central configuration unit comprises means for selecting a function to be fulfilled by the said actuators under the control of the said sensor, and means for loading the said function in the said sensors and actuators.

11. Device according to claim 10, **characterised in that** it comprises, for the configuration of several new functional modules:
a) means for implementing, for each new sensor, the physical identification, the emission of an identification message and the creation of a logic representative of the sensor;
b) means for performing for each sensor;
- b₀) a selection of the logic representative of the sensor to be considered,
- b₁) an implementation, for the sensors that are to be controlled by the said sensor considered, of the physical identification, of the emission of an identification message and, if the actuator is identified physically for the first time, of the creation of a logic representative thereof, this implementation leading to the selection of the logic representatives of the actuators that are to be controlled by the sensor in question,
- b₂) an allocation by the central configuration unit of one and the same group address to the logic representative of the sensor considered and to the logic representatives of the selected actuators that are to be controlled by the sensor considered,
- b₃) a selection, from the central configuration unit, of a function to be fulfilled by the said selected actuators under the control of the said sensor, this function being allocated to the logic representatives of the sensor and actuators;
c) means for the loading, by the central configuration unit, in the sensors and actuators, of the group addresses and functions allocated to their logic representative.

12. Device according to claim 10, **characterised in that** it comprises, for the configuration of several new functional modules:
a) means for implementing, for each new sensor and each new actuator, the physical identification, the emission of an identification message and the creation of a logic representative of the new sensor and the new actuator;
b) means for performing, for each sensor:
- b₀) a selection of the logic representatives of the sensor to be considered,
- b₁) a selection of the logic representatives of the actuators that have been controlled by the said sensor considered,
- b₂) an allocation by the central configuration unit of one and the same group address to the logic representative of the sensor considered and to the logic representatives of the selected actuators that are to be controlled by the sensor considered,
- b₃) a selection, from the central configuration unit, of a function to be fulfilled by the said selected actuators under the control of the said sensor, this function being allocated to the logic representatives of the sensor and actuators;
c) means for the loading, by the central configuration unit, in the sensors and actuators, of the group addresses and functions allocated to their logic representative.

13. Device according to claim 11 or 12, **characterised in that** the central configuration unit comprises:
i) means for allocating to the sensor considered a unique control function for the selected actuators;
ii) means for allocating, to the logic representatives of all the selected actuators, the same unique function allocated to the sensor considered.

14. Device according to claim 13, **characterised in that** the means for allocating to the sensor a unique control function for the selected actuators comprise a configuration panel (64) provided with push buttons (86A, 86B, 86C, 86D, 86E) for the selection of a predetermined function, each push button being associated with at least one function.

15. Device according to claim 14, **characterised in that** it comprises identification means of the selected actuator type, and **in that** it comprises means for allocating to the push buttons (86A, 86B, 86C, 86D, 86E) selectable functions compatible with the type of actuator selected.

16. Device according to any one of claims 8 to 15, **characterised in that** the central configuration unit comprises means for allocating and loading a physical address in the new functional module identified, after the reception of the said identification message.

17. Device according to any one of claims 8 to 16, **characterised in that** the central configuration unit (16) comprises means of numbering the sensors at the time of their physical identification, and **in that** it comprises means for selecting the numbers allocated for selecting the sensor to be considered.

18. Device according to claim 17, **characterised in that** the central configuration unit (16) comprises means (82) of displaying the numbers allocated to the sensors.

19. Device according to any one of claims 8 to 18, **characterised in that** the central configuration unit (16) comprises storage means (56) for storing the contiguration parameters allocated before they are loaded in the sensors or actuators.

20. Communication network comprising sensors (12) and actuators (14) communicating with one another directly by means of a communication bus (10), the sensors and actuators each comprising, after configuration, configuration parameters enabling each sensor to control the actuators, **characterised in that** it comprises a configuration device according to any one of claims 8 to 19.

21. Network according to claim 20, **characterised in that** each actuator (14) comprises an output module (30, 34, 38) connected to a member to be controlled (32, 36, 40), the said output module comprising means of controlling the member to be controlled and means (B) allowing the physical identification of the actuator on the network, and **in that** the said output modules and the said central configuration unit (16) are disposed in the immediate vicinity of one another, in particular on the same electrical panel (41), thus making them accessible simultaneously.
